# EUROPEAN PATENT APPLICATION

(11) **EP 4 796 384 A1**
(43) Date of publication of application: **26.08.2026**
(21) Application number: 24879600.5
(22) Date of filing: 07.10.2024
(51) Int. Cl.: B60Q 1/14, F21V 7/00, F21V 14/04, F21W 102/14, F21Y 115/10

(54) **CONTROL DEVICE FOR LAMP UNIT, PROGRAM, AND HEADLIGHT FOR VEHICLE**

(30) Priority: 17.10.2023 JP 2023179172
(71) Applicant: Koito Manufacturing Co., Ltd., Shinagawa-ku, Tokyo 141-0001 (JP)
(72) Inventor: SAWADA Hirotaka, Shizuoka-shi, Shizuoka 424-8764 (JP); KAMIYA Kyohei, Shizuoka-shi, Shizuoka 424-8764 (JP)
(74) Representative: Hoffmann Eitle
(86) International application number: PCT/JP2024/035722
(87) International publication number: WO 2025/084175

(57) **Abstract**

When another vehicle is located in front of a host vehicle (100), a control device (CO) outputs a signal capable of controlling a lamp unit (10) to make a first region (61,71) overlapping at least a part of the another vehicle darker in a light distribution pattern as compared with a case where the another vehicle is not located in front of the host vehicle (100), and a width (61W1) of the first region (61) in an up-down direction for a preceding vehicle (LV) when the another vehicle is the preceding vehicle (LV) is narrower than a width (71W1) of the first region (71) in the up-down direction for an oncoming vehicle (OV) whose distance from the host vehicle (100) is identical to a distance from the host vehicle (100) to the preceding vehicle (LV) .

## Description

### Technical Field

The present invention relates to a control device for a lamp unit, a program, and a headlight for a vehicle.

### Background Art

As a headlight for a vehicle typified by an automobile headlight, one that changes a light distribution pattern of emitted light is known, and Patent Literature 1 below discloses such a headlight for a vehicle.

The headlight for a vehicle described in Patent Literature 1 below includes a lamp unit capable of changing a light distribution pattern of emitted light, and a control device. The control device controls the lamp unit based on information from a detection device that detects another vehicle located in front of a host vehicle, and darkens a region overlapping the another vehicle in the light distribution pattern. Therefore, in the following Patent Literature 1, it is considered that the headlight for a vehicle can prevent glare from being given to a driver of the another vehicle located in front of the host vehicle.

[Patent Literature 1] JP 2020-104561 A

### Summary of Invention

When the region to be darkened is formed as in the headlight for a vehicle of Patent Literature 1, the visibility of the front of the host vehicle tends to decrease as the region to be darkened becomes wider, and there is a demand for suppressing the decrease in visibility of the front of the host vehicle.

Therefore, an object of the present invention is to provide a control device for a lamp unit, a program, and a headlight for a vehicle which are capable of achieving a lamp unit capable of suppressing a decrease in visibility while suppressing glare from being given to a driver of another vehicle.

In order to achieve the above object, a control device for a lamp unit according to the present invention is a control device for a lamp unit capable of receiving a signal input from an other vehicle detection device that detects another vehicle located in front of a host vehicle and changing a light distribution pattern of emitted light, wherein, in a case where the another vehicle is located in front of the host vehicle, a signal capable of controlling the lamp unit is output to make a first region darker as compared with a case where the another vehicle is not located in front of the host vehicle, the first region overlapping at least a part of the another vehicle in the light distribution pattern, and a width of the first region in an up-down direction for a preceding vehicle when the another vehicle is the preceding vehicle is narrower than a width of the first region in the up-down direction for an oncoming vehicle whose distance from the host vehicle is identical to a distance from the host vehicle to the preceding vehicle.

In addition, in order to achieve the above object, a program of the present invention causes a control device for a lamp unit, capable of receiving a signal input from an other vehicle detection device that detects another vehicle located in front of a host vehicle and changing a light distribution pattern of emitted light, to execute a step of outputting, in a case where the another vehicle is located in front of the host vehicle, a signal capable of controlling the lamp unit to make a first region darker as compared with a case where the another vehicle is not located in front of the host vehicle, the first region overlapping at least a part of the another vehicle in the light distribution pattern, wherein a width of the first region in an up-down direction for a preceding vehicle when the another vehicle is the preceding vehicle is narrower than a width of the first region in the up-down direction for an oncoming vehicle whose distance from the host vehicle is identical to a distance from the host vehicle to the preceding vehicle.

In addition, in order to achieve the above object, a headlight for a vehicle of the present invention includes: a lamp unit capable of changing a light distribution pattern of emitted light; and a control device that controls the lamp unit by receiving a signal input from an other vehicle detection device that detects another vehicle located in front of a host vehicle, wherein the control device controls the lamp unit, in a case where the another vehicle is located in front of the host vehicle, to make a first region darker as compared with a case where the another vehicle is not located in front of the host vehicle, the first region overlapping at least a part of the another vehicle in the light distribution pattern, and a width of the first region in an up-down direction for a preceding vehicle when the another vehicle is the preceding vehicle is narrower than a width of the first region in the up-down direction for an oncoming vehicle whose distance from the host vehicle is identical to a distance from the host vehicle to the preceding vehicle.

For example, a large vehicle such as a truck may include a box-shaped cargo bed behind a driver's seat, and a cargo may be placed on the cargo bed. Therefore, in a case where the preceding vehicle is a large vehicle, light emitted from the lamp unit of the host vehicle is hard to reach a driver of the large vehicle, and it tends to be difficult to give glare to the driver. Therefore, the glare can be suppressed from being given to the driver of the preceding vehicle also by setting, for example, a region to be darkened for the preceding vehicle so as to entirely overlap the preceding vehicle when the preceding vehicle is a passenger vehicle and to make a large vehicle protrude upward when the preceding vehicle is the large vehicle. In addition, a position of a driver's seat of a large vehicle is typically higher than a position of a driver's seat of a passenger vehicle. Therefore, for example, when a region to be darkened for an oncoming vehicle is set to entirely overlap a passenger vehicle when the oncoming vehicle is the passenger vehicle and to make a large vehicle protrude upward when the oncoming vehicle is the large vehicle, a driver's seat of the large vehicle may not overlap the region to be darkened. Therefore, there is a case where glare cannot be suppressed from being given to a driver of the large vehicle that is the oncoming vehicle. In the control device for the lamp unit, the program, and the headlight for a vehicle, as described above, the width of the first region in the up-down direction for the preceding vehicle when the another vehicle is the preceding vehicle is narrower than the width of the first region in the up-down direction for the oncoming vehicle whose distance from the host vehicle is identical to the distance from the host vehicle to the preceding vehicle. Therefore, a region to be darkened for the preceding vehicle can be set to overlap a passenger vehicle entirely when the preceding vehicle is the passenger vehicle, and to make a large vehicle protrude upward when the preceding vehicle is the large vehicle, and a region to be darkened for the oncoming vehicle can be set to overlap a large vehicle entirely even when the oncoming vehicle is the large vehicle. Therefore, as compared with a case where the width of the first region in the up-down direction for the preceding vehicle when the another vehicle is the preceding vehicle is equal to or larger than the width of the first region in the up-down direction for the oncoming vehicle, it is possible to suppress a decrease in visibility while suppressing glare from being given to a driver of the another vehicle.

Preferably, the width of the first region in the up-down direction for the preceding vehicle when the another vehicle is the preceding vehicle is narrower than the width of the first region in the up-down direction for the oncoming vehicle having a vehicle height identical to a vehicle height of the preceding vehicle.

According to such a configuration, it is possible to suppress the decrease in visibility while suppressing the glare given to the driver of the another vehicle regardless of the vehicle height of the another vehicle.

The control device may output a signal capable of controlling the lamp unit to make a second region darker as compared with the case where the another vehicle is not located in front of the host vehicle, and brighter than the first region, the second region including a region above the first region for the preceding vehicle when the another vehicle is the preceding vehicle.

In a case where the preceding vehicle is a truck including a box-shaped cargo bed, emitted light may be reflected by the cargo bed, and glare may be given to a driver of the host vehicle by the reflected light. According to the above configuration, as compared with a case where the second region is not darkened, it is possible to reduce the amount of light reflected by the cargo bed and emitted to the driver of the host vehicle, and it is possible to suppress the glare to the driver of the host vehicle due to the reflected light.

The control device may receive a signal input from a luminance detection device that detects luminance of light from a front of the host vehicle toward the host vehicle, and output a signal when luminance of light directed from a second region toward the host vehicle is equal to or more than a predetermined value, the second region including a region above the first region for the preceding vehicle when the another vehicle is the preceding vehicle, the signal being capable of controlling the lamp unit to make the second region darker as compared with the case where the another vehicle is not located in front of the host vehicle, and brighter than the first region.

According to such a configuration, for example, it is possible to make the second region dark when the preceding vehicle is a truck and light is reflected by a cargo bed of the truck, and to prevent the second region from being dark when the preceding vehicle is a passenger vehicle. Therefore, it is possible to suppress a decrease in visibility of the front of the host vehicle while suppressing the glare to the driver of the host vehicle.

When the second region is darkened, the sum of the width of the first region in the up-down direction and a width of the second region in the up-down direction for the preceding vehicle when the another vehicle is the preceding vehicle may be narrower than the width of the first region in the up-down direction for the oncoming vehicle.

According to such a configuration, as compared with a case where the sum is equal to or wider than the width of the first region in the up-down direction for the oncoming vehicle, a width of a region to be darkened in the up-down direction can be reduced, and the decrease in visibility of the front of the host vehicle can be suppressed.

Alternatively, the sum of the width of the first region in the up-down direction and the width of the second region in the up-down direction for the preceding vehicle when the another vehicle is the preceding vehicle may be wider than the width of the first region in the up-down direction for the oncoming vehicle.

According to such a configuration, the width of the region to be darkened in the up-down direction can be made wider as compared with the case where the sum is equal to or narrower than the width of the first region in the up-down direction for the oncoming vehicle. Therefore, as compared with the above case, for example, in a case where the preceding vehicle is a truck, and it is possible to further suppress the glare to the driver of the host vehicle due to reflected light reflected by a cargo bed of the truck.

Alternatively, the sum of the width of the first region in the up-down direction and the width of the second region in the up-down direction for the preceding vehicle when the another vehicle is the preceding vehicle may be equal to the width of the first region in the up-down direction for the oncoming vehicle.

When the second region is darkened, brightness of the second region may be darker on a side closer to the first region.

According to such a configuration, a boundary between the first region and the second region can be made inconspicuous, and the driver of the host vehicle can be suppressed from feeling uncomfortable.

When the second region is darkened, the width of the second region in the up-down direction may be narrower as a distance from the host vehicle to the preceding vehicle increases.

As the distance from the host vehicle to the preceding vehicle increases, the boundary between the first region and the second region appears blurred due to diffusion of light. Therefore, according to such a configuration, it is possible to make the boundary between the first region and the second region inconspicuous while reducing the width of the second region and suppressing the decrease in visibility of the front. Note that the width of the second region in the up-down direction here is a width in the light distribution pattern projected on a projection plane at a place where the preceding vehicle is located.

The first region for the oncoming vehicle may extend from an upper edge to a lower edge of the light distribution pattern.

The oncoming vehicle has a higher relative speed with respect to the host vehicle than the preceding vehicle, and a position with respect to the host vehicle easily changes. Therefore, according to such a configuration, it is possible to suppress a decrease in an overlapping amount between the oncoming vehicle and the first region, and it is possible to easily suppress glare to a driver of the oncoming vehicle.

As described above, according to the present invention, it is possible to provide the control device for the lamp unit, the program, and the headlight for the vehicle which are capable of achieving the lamp unit capable of suppressing the decrease in visibility while suppressing the glare from being given to the driver of the another vehicle.

### Brief Description of Drawings

[FIG. 1] FIG. 1 is a schematic view illustrating a vehicle including a headlight for a vehicle according to a first embodiment.
[FIG. 2] FIG. 2 is a cross-sectional view schematically illustrating a lamp part.
[FIG. 3] FIG. 3 is a front view schematically illustrating a light source part illustrated in FIG. 2.
[FIG. 4] FIG. 4 is a flowchart illustrating an operation of a control device in the first embodiment.
[FIG. 5] FIG. 5 is a view illustrating an example of a light distribution pattern of a high beam in the first embodiment.
[FIG. 6] FIG. 6 is a view illustrating an example of an ADB light distribution pattern in the first embodiment, similarly to FIG. 5.
[FIG. 7] FIG. 7 is a view illustrating a luminance distribution of a part of the ADB light distribution pattern illustrated in FIG. 6.
[FIG. 8] FIG. 8 is a view illustrating another example of the ADB light distribution pattern in the first embodiment, similarly to FIG. 6.
[FIG. 9] FIG. 9 is a view illustrating still another example of the ADB light distribution pattern in the first embodiment, similarly to FIG. 6.
[FIG. 10] FIG. 10 is a schematic view of a host vehicle and a preceding vehicle as viewed from the side.
[FIG. 11] FIG. 11 is a schematic view of the host vehicle and an oncoming vehicle as viewed from the side.
[FIG. 12] FIG. 12 is a view illustrating an example of an ADB light distribution pattern in a second embodiment, similarly to FIG. 6.
[FIG. 13] FIG. 13 is a view illustrating an example of an ADB light distribution pattern according to a first modification, similarly to FIG. 6.
[FIG. 14] FIG. 14 is a view illustrating an example of an ADB light distribution pattern according to a second modification, similarly to FIG. 6.
[FIG. 15] FIG. 15 is a view illustrating an example of an ADB light distribution pattern according to a third modification, similarly to FIG. 6.

### Description of Embodiments

Hereinafter, preferred embodiments of a control device for a lamp unit, a program, and a headlight for a vehicle according to the present invention will be described in detail with reference to the drawings. The embodiments exemplified hereinafter are intended to facilitate understanding of the present invention and are not intended to limit the present invention. The present invention can be modified and improved within the scope of the claims without departing from the gist thereof. In addition, constituent elements in the embodiments exemplified hereinafter may be appropriately combined in the present invention. Note that, in the drawings referred to hereinafter, dimensions of each member may be changed to facilitate understanding. In addition, in the drawings, only some of similar components may be denoted by reference signs, and some reference signs may be omitted for the sake of clarity.

### (First Embodiment)

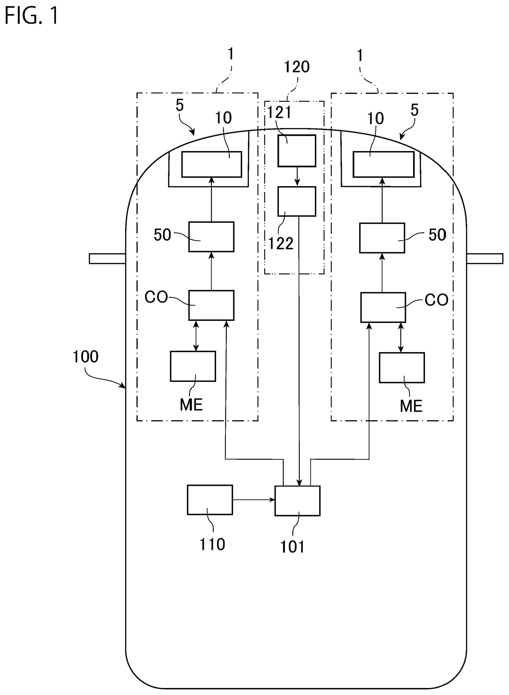

FIG. 1 is a schematic view illustrating a vehicle including a headlight for the vehicle according to the present embodiment. As illustrated in FIG. 1, a host vehicle 100 includes a pair of left and right headlights 1 for the vehicle, an ECU (Electronic Control Unit) 101, a light switch 110, and an other vehicle detection device 120. In the present specification, "right" means the right side in the forward direction of the host vehicle 100, "left" means the left side in the forward direction, and a driver means a driver of the host vehicle 100. The host vehicle 100 of the present embodiment is an automobile.

Each of the headlights 1 for the vehicle includes a lamp part 5, a memory ME, a control device CO, and a power supply circuit 50. Typically, the lamp part 5 of one of the headlights 1 for the vehicle is disposed on the left side of a front portion of the host vehicle 100, and the lamp part 5 of the other headlight 1 for the vehicle is disposed on the right side of the portion part. A configuration of the one headlight 1 for the vehicle is the same as a configuration of the other headlight 1 for the vehicle except that shapes of the lamp parts 5 are substantially symmetrical. Therefore, the one headlight 1 for the vehicle will be described hereinafter, and the description of the other headlight 1 for the vehicle will be omitted.

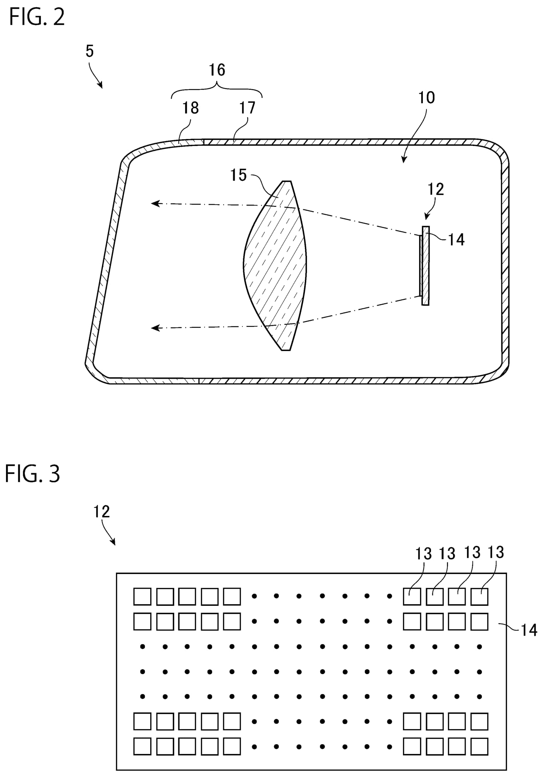

FIG. 2 is a cross-sectional view schematically illustrating the lamp part 5. The lamp part 5 mainly includes a chassis 16 and a lamp unit 10.

The chassis 16 mainly includes a housing 17 and a front cover 18. The front cover 18 transmits light emitted from the lamp unit 10. The housing 17 is formed in a box shape having an opening on the front side, and the front cover 18 is fixed to the housing 17 so as to close the opening. In this manner, an accommodation space surrounded by the housing 17 and the front cover 18 is formed in the chassis 16, and the lamp unit 10 is disposed in the accommodation space.

The lamp unit 10 can change a light distribution pattern of the emitted light. The light distribution pattern is, for example, a pattern of light drawn by light emitted to a vertical plane located in front of the host vehicle 100, and includes an intensity distribution of the light in addition to an outer shape of the light. The lamp unit 10 of the present embodiment mainly includes a light source part 12 that emits light forward and a projection lens 15 disposed in front of the light source part 12.

FIG. 3 is a front view schematically illustrating the light source part 12 illustrated in FIG. 2. As illustrated in FIG. 3, the light source part 12 of the present embodiment includes a plurality of light emitting elements 13 as light emitting parts that emit light, and a circuit board 14 on which the plurality of light emitting elements 13 are mounted. The plurality of light emitting elements 13 are disposed in a matrix form to form rows in the up-down direction and the left-right direction, and emit light forward. These light emitting elements 13 can individually change the amount of light to be emitted. In the present embodiment, the light emitting elements 13 are micro-LEDs (Light Emitting Diodes), and the light source part 12 is a so-called micro-LED array. The number of the light emitting elements 13 in the vertical column of the light emitting elements 13 is preferably 8 or more, and the number of the light emitting elements 13 in the horizontal row of the light emitting elements 13 is preferably 32 or more.

The projection lens 15 is disposed in front of the light source part 12, the light emitted from the light source part 12 is incident thereon, and a divergence angle of the light is adjusted by the projection lens 15. Therefore, light whose divergence angle is adjusted by the projection lens 15 is emitted from the lamp unit 10, and the light is emitted from the lamp part 5 to the front of the host vehicle 100 via the front cover 18. The projection lens 15 of the present embodiment is a lens in which a light incident surface and a light emitting surface are formed in a convex shape, and a rear focal point of the projection lens 15 is located on or near the light emitting surface of any one of the light emitting elements 13 in the light source part 12. Therefore, the light distribution pattern of the light emitted to the front of the host vehicle 100 is a light distribution pattern in which the light distribution pattern of the light emitted from the light source part 12 is vertically and horizontally reversed.

Next, the control device CO illustrated in FIG. 1 includes, for example, an integrated circuit such as a microcontroller, an IC (Integrated Circuit), an LSI (Large-scale Integrated Circuit), or an ASIC (Application Specific Integrated Circuit), or an NC (Numerical Control) Device. In addition, in a case where the NC device is used, the control device CO may use a machine learning device or may not use a machine learning device. The control device CO is electrically connected to the memory ME, the power supply circuit 50, and the ECU 101.

The memory ME is configured to be capable of storing information and reading the stored information. The memory ME is, for example, a non-transitory recording medium, and is preferably a semiconductor recording medium such as a RAM (Random Access Memory) or a ROM (Read Only Memory), but may include a recording medium of any format such as an optical recording medium or a magnetic recording medium. Note that "non-transitory" recording media include all computer-readable recording media except for a transitory propagating signal, and do not exclude a volatile recording medium. The memory ME stores a program for controlling the lamp unit 10 and information necessary for the control, and the control device CO reads the program and information stored in the memory ME.

The control device CO of the present embodiment reads the program for controlling the lamp unit 10 from the memory ME, outputs a signal to the power supply circuit 50, and controls the power supply circuit 50 to control the lamp unit 10.

The power supply circuit 50 includes a driver, and when a control signal is input from the control device CO, power supplied from a power supply (not illustrated) to each of the light emitting elements 13 of the light source part 12 is adjusted by the driver. In this manner, the amount of light emitted from each of the light emitting elements 13 is adjusted, and light having a light distribution pattern in accordance with the amount of light emitted from each of the light emitting elements 13 is emitted from the lamp unit 10.

The light switch 110 of the present embodiment is a switch that selects emission or non-emission of light. The light switch 110 outputs a signal indicating the emission of light to the control device CO via the ECU 101 when being turned on, and does not output the signal when being turned off.

The other vehicle detection device 120 of the present embodiment detects other vehicles located in front of the host vehicle 100. The other vehicle detection device 120 of the present embodiment can identify and detect other vehicles as a preceding vehicle and an oncoming vehicle, and includes an image acquisition unit 121 and a detection unit 122.

The image acquisition unit 121 of the present embodiment acquires a front image of the host vehicle 100, and this image includes at least a part of a region irradiated with light emitted from the pair of headlights 1 for the vehicle. In addition, this image also includes information on a distance from the host vehicle 100. Examples of a configuration of the image acquisition unit 121 include a configuration including a camera and light detection and ranging (LiDAR), a configuration including a camera and a millimeter wave radar, and a configuration including a stereo camera. Examples of cameras include a CCD (Charged Coupled Device) camera and a CMOS (Complementary Metal Oxide Semiconductor) camera. The image acquisition unit 121 outputs a signal related to the acquired image to the detection unit 122. Note that a camera receives light incident on the camera and generates an image based on the amount of the received light. Therefore, it can be understood that a camera that acquires the front image of the host vehicle 100 is a luminance detection device that detects luminance of light directed from the front of the host vehicle 100 toward the host vehicle 100, and the other vehicle detection device 120 of the present embodiment also serves as the luminance detection device.

The detection unit 122 has, for example, a configuration similar to that of the control device CO. The detection unit 122 determines the presence or absence of another vehicle by performing predetermined image processing on the image acquired by the image acquisition unit 121, and acquires information related to another vehicle when there is another vehicle. The information related to another vehicle includes whether the another vehicle is a preceding vehicle or an oncoming vehicle, position coordinates of the another vehicle with respect to the host vehicle 100, and the like. When determining that there is another vehicle, the other vehicle detection device 120 outputs a signal indicating the information related to another vehicle to the control device CO via the ECU 101. In addition, when determining that there is no other vehicle, the other vehicle detection device 120 outputs a signal indicating that there is no other vehicle to the control device CO via the ECU 101, but may not output the signal.

In the present embodiment, the other vehicle detection device 120 acquires a vector from the host vehicle 100 to the another vehicle and a distance from the host vehicle 100 to the another vehicle as the position coordinates of the another vehicle. This vector is a three-dimensional vector, and is, for example, a vector of a coordinate system based on a first axis extending along the front-rear direction of the host vehicle 100 from a reference point with respect to the host vehicle 100, a second axis that passes through the reference point, is perpendicular to the first axis, and extends along the left-right direction of the host vehicle 100, and a third axis that passes through the reference point and is perpendicular to the first axis and the second axis. Examples of the reference point include a point on a road surface immediately below the center of a front end of the host vehicle 100 in the left-right direction. Note that information indicating the position coordinates of the another vehicle is not limited.

In the present embodiment, when a pair of white light spots having luminance higher than predetermined luminance are present in the image acquired by the image acquisition unit 121 at a predetermined interval in the left-right direction, the detection unit 122 determines that there is an oncoming vehicle assuming that the pair of light spots are headlights of the another vehicle. Then, the detection unit 122 detects position coordinates of a midpoint of a line segment connecting the pair of light spots as the headlights as position coordinates of the oncoming vehicle. In addition, when a pair of red light spots having luminance higher than predetermined luminance are present in the image acquired by the image acquisition unit 121 at a predetermined interval in the left-right direction, the detection unit 122 determines that there is a preceding vehicle assuming that the pair of light spots are tail lamps of the another vehicle. Then, the detection unit 122 detects position coordinates of a midpoint of a line segment connecting the pair of light spots as the tail lamps as position coordinates of the preceding vehicle. Note that a method of detecting another vehicle and a method of identifying a preceding vehicle and an oncoming vehicle are not limited.

Next, an operation of the headlight 1 for the vehicle of the present embodiment will be described. In the present embodiment, the operations of the pair of headlights 1 for the vehicle are the same and synchronized with each other. Therefore, an operation of one of the headlights 1 for the vehicle will be described hereinafter, and the description of the operation of the other headlight 1 for the vehicle will be omitted.

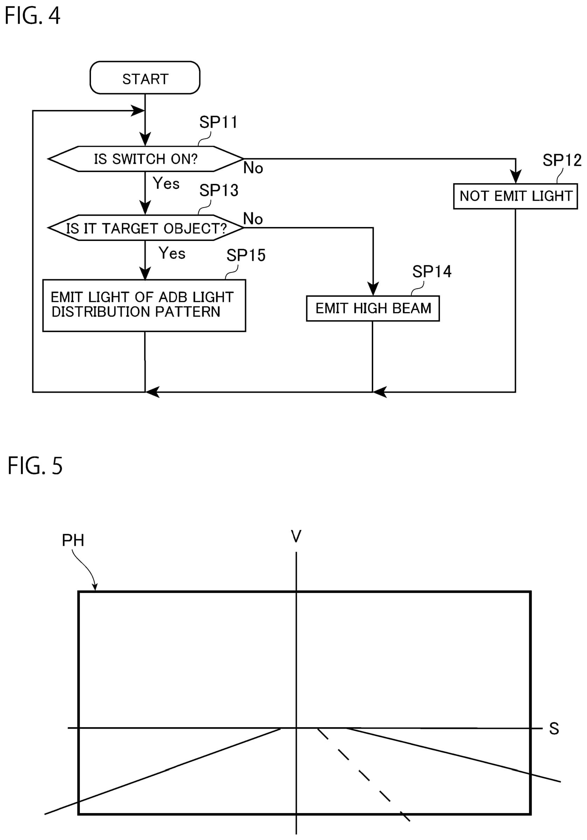

FIG. 4 is a flowchart illustrating an operation of the control device CO in the present embodiment. As illustrated in FIG. 4, in the present embodiment, the operation of the control device CO includes steps SP11 to SP15, and the program read from the memory ME by the control device CO causes the control device CO to execute these steps SP11 to SP15. In a state at the start illustrated in FIG. 4, it is assumed that a signal from the other vehicle detection device 120 is input to the control device CO.

### (Step SP11)

This step is a step of making the next step different depending on whether or not a signal is input from the light switch 110. In this step, the control device CO advances the control flow to step SP12 when no signal is input from the light switch 110, and advances the control flow to step SP13 when this signal is input.

### (Step SP12)

This step is a step of setting non-emission of light from the headlight 1 for the vehicle. In this step, the control device CO controls the lamp unit 10 by outputting a signal to the power supply circuit 50 to control the power supply circuit 50, and sets non-emission of light from the lamp unit 10. Accordingly, the headlight 1 for the vehicle does not emit light. Note that the signal output from the control device CO is not particularly limited as long as the signal can control the lamp unit 10 to set the non-emission. It suffices that the non-emission of light from the lamp unit 10 is set as a result. For example, in a case where no light is emitted from the lamp unit 10 at the time of advancement from step SP11 to this step, it is sufficient for the control device CO to maintain such a state, and in this case, the control device CO may output no signal to the power supply circuit 50. After this step, the control device CO returns the control flow to step SP11.

### (Step SP13)

This step is a step of making the next step different in accordance with a signal from the other vehicle detection device 120. In this step, the control device CO advances the control flow to step SP14 when a signal indicating that there is no other vehicle is input from the other vehicle detection device 120, and advances the control flow to step SP15 when a signal indicating information related to another vehicle is input from the other vehicle detection device 120. Note that, in a case where the other vehicle detection device 120 is configured to output no signal when there is no other vehicle, the control device CO advances the control flow to step SP14 when no signal is input from the other vehicle detection device 120.

### (Step SP14)

This step is a step of emitting a high beam from the headlight 1 for the vehicle. In this step, the control device CO controls the lamp unit 10 by outputting a signal to the power supply circuit 50 to control the power supply circuit 50, and causes the lamp unit 10 to emit a high beam. In this manner, when there is no other vehicle in front of the host vehicle 100, the high beam is emitted from the headlight 1 for the vehicle. Note that the signal output from the control device CO is not particularly limited as long as the signal can control the lamp unit 10 to emit the high beam. For example, in a case where a high beam is emitted from the lamp unit 10 at the time of advancement from step SP13 to this step, it is sufficient for the control device CO to maintain such a state, and in this case, the control device CO may output no signal to the power supply circuit 50. After this step, the control device CO returns the control flow to step SP11.

FIG. 5 is a view illustrating an example of a light distribution pattern of a high beam in the present embodiment. In FIG. 5, a horizontal line is denoted by S, a vertical line passing through the center of the host vehicle 100 in the left-right direction is denoted by V, and a light distribution pattern PH of a high beam formed on a virtual vertical screen disposed 25 m ahead of the host vehicle 100 is indicated by a thick line. In the present embodiment, when the high beam is emitted, light is emitted from all the light emitting elements 13, and an outer shape of the light distribution pattern of the high beam is substantially a horizontally long rectangular shape.

### (Step SP15)

This step is a step of causing the headlight 1 for the vehicle to emit light having an ADB light distribution pattern in accordance with another vehicle located in front of the host vehicle 100 detected by the other vehicle detection device 120. The ADB light distribution pattern in the present embodiment is a light distribution pattern in which brightness in at least a first region and a second region is changed out of the light distribution pattern PH of the high beam. The first region overlaps at least a part of another vehicle. The second region is provided with respect to the first region for a preceding vehicle when the another vehicle is the preceding vehicle, and is a region including a region above the first region. A change in brightness of the first region is a change that is darker as compared with a case where there is no other vehicle located in front of the host vehicle 100, and the amount of light in the first region decreases as compared with the case where there is no other vehicle located in front of the host vehicle 100. A change in brightness of the second region is a change that is darker as compared with a case where there is no other vehicle located in front of the host vehicle 100 and is brighter than the first region, and the amount of light in the second region decreases as compared with the case where there is no other vehicle located in front of the host vehicle 100.

In this step, the control device CO controls the lamp unit 10 by outputting a signal to the power supply circuit 50 based on information related to another vehicle input from the other vehicle detection device 120 to control the power supply circuit 50, and causes the lamp unit 10 to emit light having the ADB light distribution pattern. Thus, when there is another vehicle in front of the host vehicle 100, light having the ADB light distribution pattern in accordance with the another vehicle is emitted from the headlight 1 for the vehicle. Note that the signal output from the control device CO is not particularly limited as long as the signal can control the lamp unit 10 to emit light having the ADB light distribution pattern in accordance with another vehicle. After this step, the control device CO returns the control flow to step SP11.

Next, the ADB light distribution pattern of the present embodiment will be described in detail.

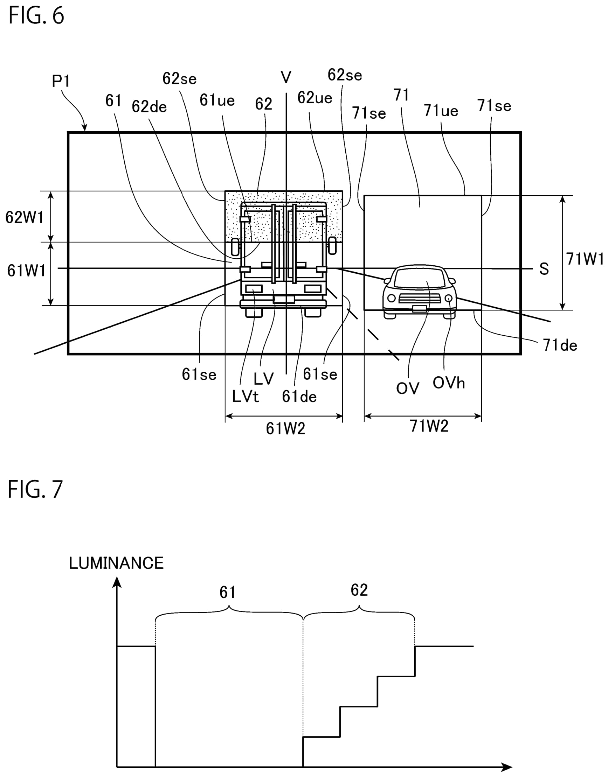

FIG. 6 is a view illustrating an example of the ADB light distribution pattern in the present embodiment, similarly to FIG. 5, and is a view illustrating the ADB light distribution pattern when a preceding vehicle LV and an oncoming vehicle OV, which are other vehicles, are located in front of the host vehicle 100. A situation illustrated in FIG. 6 is a situation in which a distance from the host vehicle 100 to the preceding vehicle LV and a distance from the host vehicle 100 to the oncoming vehicle OV are the same, the preceding vehicle LV is a truck as a large vehicle, and the oncoming vehicle OV is a passenger vehicle. Note that the distance from the host vehicle 100 to the preceding vehicle LV and the distance from the host vehicle 100 to the oncoming vehicle OV are distances in a direction parallel to the front-rear direction of the host vehicle 100. Meanwhile, the oncoming vehicle OV is slightly shifted in the left-right direction from the front of the host vehicle 100 on a straight road. Therefore, the distance from the host vehicle 100 to the preceding vehicle LV in the direction parallel to the front-rear direction of the host vehicle 100 is slightly different from a distance from the host vehicle 100 to the oncoming vehicle OV in a direction from the host vehicle 100 to the oncoming vehicle OV, but the difference between these distances is small. Therefore, the distance from the host vehicle 100 to the oncoming vehicle OV in the direction parallel to the front-rear direction of the host vehicle 100 is considered to be substantially the same as the distance from the host vehicle 100 to the oncoming vehicle OV in the direction from the host vehicle 100 to the oncoming vehicle OV. Therefore, even when the distance from the host vehicle 100 to the oncoming vehicle OV is the distance from the host vehicle 100 to the oncoming vehicle OV in the direction from the host vehicle 100 to the oncoming vehicle OV in the situation illustrated in FIG. 6, the ADB light distribution pattern is substantially the same.

In an ADB light distribution pattern P1, a first region 61 overlapping at least a part of the preceding vehicle LV is darker than the first region 61 in the light distribution pattern PH of the high beam. In addition, a first region 71 overlapping at least a part of the oncoming vehicle OV is darker than the first region 71 in the light distribution pattern PH of the high beam. Therefore, it is possible to suppress glare to drivers of the preceding vehicle LV and the oncoming vehicle OV according to the headlight 1 for the vehicle of the present embodiment. Note that the first regions 61 and 71 in the present embodiment are light-shielding regions that are not irradiated with light, but are not limited thereto. In addition, shapes of the first regions 61 and 71 are rectangular, but are not limited thereto.

In addition, a second region 62 including a region above the first region 61 for the preceding vehicle LV is darker than the second region 62 in the light distribution pattern PH of the high beam and brighter than the first region 61. Note that, in FIG. 6, the second region 62 is hatched with a plurality of dots in order to facilitate understanding. In the present embodiment, the second region 62 has a rectangular shape elongated in the left-right direction, and a lower edge 62de of the second region 62 has a rectangular shape along an upper edge 61ue of the first region 61 and in contact with the entire edge 61ue. That is, the second region 62 is connected to the entire edge 61ue. Then, a width of the second region 62 in the left-right direction is identical to a width of the first region 61 in the left-right direction, a right edge 62se of the second region 62 is connected to a right edge 61se of the first region 61, and a left edge 62se of the second region 62 is connected to a left edge 61se of the first region 61.

FIG. 7 is a view illustrating a luminance distribution of a part of the ADB light distribution pattern P1 illustrated in FIG. 6, and is a view illustrating a luminance distribution on the vertical line crossing the first region 61 and the second region 62 in the up-down direction. As illustrated in FIG. 7, in the present embodiment, luminance of the second region 62 is lower on a side closer to the first region 61, and decreases stepwise from a side opposite to the first region 61 side to the first region 61 side. That is, brightness of the second region 62 is darker on the side closer to the first region 61, and is darkened stepwise from the side opposite to the first region 61 side to the first region 61 side. As described above, in the present embodiment, since the brightness of the second region 62 is darker on the side closer to the first region 61, the upper edge 61ue of the first region 61, which is a boundary between the first region 61 and the second region 62, can be made inconspicuous, and the driver of the host vehicle 100 can be suppressed from feeling uncomfortable. Note that the brightness of the second region 62 may gradually decrease from the side opposite to the first region 61 side to the first region 61 side, or may be constant in the up-down direction.

A width 61W1 of the first region 61 in the up-down direction for the preceding vehicle LV is narrower than a width 71W1 of the first region 71 in the up-down direction for the oncoming vehicle OV whose distance from the host vehicle 100 is identical to the distance from the host vehicle 100 to the preceding vehicle LV. In addition, in the present embodiment, the sum of the width 61W1 of the first region 61 in the up-down direction for the preceding vehicle LV and a width 62W1 of the second region 62 in the up-down direction is equal to the width 71W1 of the first region 71 in the up-down direction for the oncoming vehicle OV.

In the present embodiment, the upper edge 61ue of the first region 61, a lower edge 61de, and an upper edge 62ue of the second region 62 for the preceding vehicle LV are set based on a tail lamp LVt of the preceding vehicle LV. In addition, an upper edge 71ue and a lower edge 71de of the first region 71 for the oncoming vehicle OV are set based on a headlight OVh of the oncoming vehicle OV.

Specifically, in the present embodiment, in the ADB light distribution pattern P1 on the virtual vertical screen disposed at a position where the preceding vehicle LV is, the upper edge 61ue of the first region 61 is located, for example, about 1.7 m above the tail lamp LVt of the preceding vehicle LV. In addition, the upper edge 62ue of the second region 62 is located, for example, about 3.45 m above the tail lamp LVt of the preceding vehicle LV. In addition, the lower edge 61de of the first region 61 is located, for example, about 3.8 m below the upper edge 62ue of the second region 62.

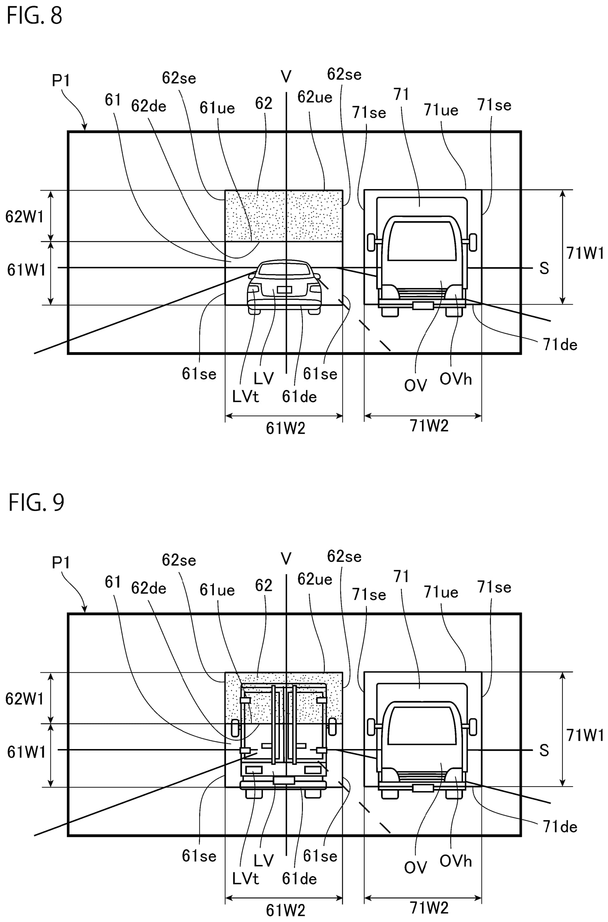

A vehicle height of a typical passenger car is about 2.0 m, and a vehicle height of a truck as a typical large vehicle is about 3.8 m. In addition, a height of the tail lamp LVt is typically higher than 0.35 m. Therefore, as illustrated in FIG. 8, the upper edge 61ue of the first region 61 may be located near an upper end of the typical passenger car or above the upper end. In addition, the upper edge 62ue of the second region 62 may be located near an upper end of the truck or above the upper end. Note that FIG. 8 is a view illustrating another example of the ADB light distribution pattern in the present embodiment, similarly to FIG. 6, and a situation illustrated in FIG. 8 is a situation in which the preceding vehicle LV is a passenger car and the oncoming vehicle OV is a truck as a large vehicle in the situation illustrated in FIG. 6.

In addition, in the present embodiment, in the ADB light distribution pattern P1 on the virtual vertical screen disposed at a position where the oncoming vehicle OV is, the upper edge 71ue of the first region 71 is located, for example, about 3.3 m above the headlight OVh of the oncoming vehicle OV. In addition, the lower edge 71de of the first region 71 is located, for example, about 3.8 m below the upper edge 71ue of the first region 71. A height of the headlight OVh is typically higher than 0.5 m. Therefore, the upper edge 71ue of the first region 71 may be located near an upper end of the truck or above the upper end.

In addition, in the present embodiment, a width 61W2 of the first region 61 in the left-right direction is equal to a width 71W2 of the first region 71 in the left-right direction for the oncoming vehicle OV. In the present embodiment, the width 61W1 in the ADB light distribution pattern P1 on the virtual vertical screen disposed at the position where the preceding vehicle LV is and the width 71W1 in the ADB light distribution pattern P1 on the virtual vertical screen disposed at the position where the oncoming vehicle OV is are, for example, about 3.0 m. A vehicle width in the left-right direction is typically narrower than 2.5 m. Therefore, the preceding vehicle LV can be prevented from jumping out in the left-right direction from the first region 61, and the oncoming vehicle OV can be prevented from jumping out in the left-right direction from the first region 71.

FIG. 9 is a view illustrating still another example of the ADB light distribution pattern in the present embodiment, similarly to FIG. 6, and is a view illustrating the ADB light distribution pattern when the preceding vehicle LV and the oncoming vehicle OV, which are other vehicles, are located in front of the host vehicle 100. A situation illustrated in FIG. 9 is a situation in which the distance from the host vehicle 100 to the preceding vehicle LV and the distance from the host vehicle 100 to the oncoming vehicle OV are the same, the preceding vehicle LV and the oncoming vehicle OV are trucks as large vehicles, and vehicle heights of the preceding vehicle LV and the oncoming vehicle OV are the same. Note that, similarly to the situation illustrated in FIG. 6, the distance from the host vehicle 100 to the preceding vehicle LV and the distance from the host vehicle 100 to the oncoming vehicle OV are distances in a direction parallel to the front-rear direction of the host vehicle 100. However, even when the distance from the host vehicle 100 to the oncoming vehicle OV is the distance from the host vehicle 100 to the oncoming vehicle OV in the direction from the host vehicle 100 to the oncoming vehicle OV in the situation illustrated in FIG. 9, the ADB light distribution pattern is substantially the same. In the present embodiment, the width 61W1 of the first region 61 in the up-down direction for the preceding vehicle LV changes depending on the distance from the host vehicle 100 to the preceding vehicle LV, and does not change depending on the vehicle height of the preceding vehicle LV. In addition, the width 71W1 of the first region 71 in the up-down direction for the oncoming vehicle OV changes depending on the distance from the host vehicle 100 to the oncoming vehicle OV, and does not change depending on the vehicle height of the oncoming vehicle OV. Therefore, as illustrated in FIG. 9, in the present embodiment, the width 61W1 of the first region 61 in the up-down direction for the preceding vehicle LV is narrower than the width 71W1 of the first region 71 in the up-down direction for the oncoming vehicle OV having the same vehicle height as the preceding vehicle LV and the same distance from the host vehicle 100 as the distance from the host vehicle 100 to the preceding vehicle LV.

Positions of the edges of the first region 61 and the second region 62 change depending on the distance from the host vehicle 100 to the preceding vehicle LV, and positions of the edges of the first region 71 change depending on the distance from the host vehicle 100 to the oncoming vehicle OV. Therefore, the control device CO of the present embodiment calculates the positions of these edges as angles in directions from the host vehicle 100 toward the edges.

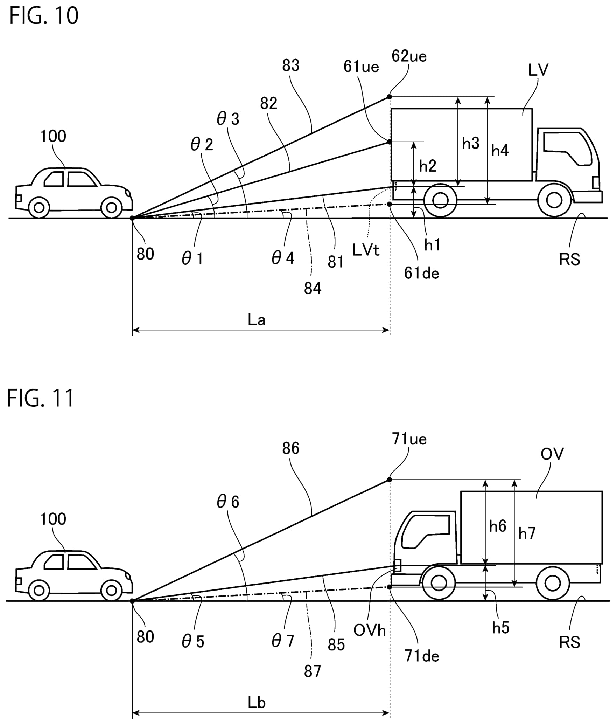

FIG. 10 is a schematic view of the host vehicle 100 and the preceding vehicle LV as viewed from the side. As illustrated in FIG. 10, when an angle formed by a first reference plane 81, which passes through a reference point 80 and a pair of the tail lamps LVt, and a road surface RS is θ1, a height from the road surface RS to the tail lamp LVt is h1, and a distance from the host vehicle 100 to the preceding vehicle LV is La, the height h1 is expressed by the following Formula (1). $h 1 = La \times tan \left(θ1\right)$

Note that the distance La illustrated in FIG. 10 is a distance from the host vehicle 100 to the preceding vehicle LV in a direction parallel to the front-rear direction of the host vehicle 100, but may be a distance from the host vehicle 100 to the preceding vehicle LV in a direction from the host vehicle 100 to the preceding vehicle LV.

In addition, when an angle formed by a straight line 82, which connects the reference point 80 and the upper edge 61ue of the first region 61, and the road surface RS is θ2, and a height from the tail lamp LVt to the edge 61ue is h2, the angle θ2 is expressed by the following Formula (2). $θ 2 = arctan \left(\left(h1+h2\right)/La\right)$

The formed angle θ2 is an angle in a direction from the host vehicle 100 to the edge 61ue. In the present embodiment, as described above, when the preceding vehicle LV is present, position coordinates of a midpoint of a line segment connecting a pair of light spots as the tail lamps LVt of the preceding vehicle LV are input from the other vehicle detection device 120 to the control device CO as the position coordinates of the preceding vehicle LV. That is, the formed angle θ1 can be calculated from information input from the other vehicle detection device 120 to the control device CO. In addition, the distance La from the host vehicle 100 to the preceding vehicle LV is input from the other vehicle detection device 120 to the control device CO. In addition, h2 is stored in the memory ME in advance, and is, for example, 1.7 m. The control device CO of the present embodiment calculates the formed angle θ1 using the above Formulas (1) and (2) based on the information input from the other vehicle detection device 120 and the value of h2 stored in the memory ME.

In addition, when an angle formed by a straight line 83, which connects the reference point 80 and the upper edge 62ue of the second region 62, and the road surface RS is θ3, and a height from the tail lamp LVt to the edge 62ue is h3, the angle θ3 is expressed by the following Formula (3). $θ 3 = arctan \left(\left(h1+h3\right)/La\right)$

The formed angle θ3 is an angle in a direction from the host vehicle 100 to the edge 62ue. The memory ME stores h3 in advance, and h3 is, for example, 3.45 m. The control device CO of the present embodiment calculates the formed angle θ3 using the above Formulas (1) and (3) based on the information input from the other vehicle detection device 120 and the value of h3 stored in the memory ME.

In addition, when an angle formed by a straight line 84, which connects the reference point 80 and the lower edge 61de of the first region 61, and the road surface RS is θ4, and a height from the lower edge 61de of the first region 61 to the upper edge 61ue is h4, the angle θ4 is expressed by the following Formula (4). $θ 4 = arctan \left(\left(h1+h3-h4\right)/La\right)$

The formed angle θ4 is an angle in a direction from the host vehicle 100 to the edge 61de. The memory ME stores h4 in advance, and h4 is, for example, 3.8 m. The control device CO of the present embodiment calculates the formed angle θ4 using the above Formulas (1) and (4) based on the information input from the other vehicle detection device 120 and the values of h3 and h4 stored in the memory ME.

FIG. 11 is a schematic view of the host vehicle 100 and the oncoming vehicle OV as viewed from the side. As illustrated in FIG. 11, when an angle formed by a second reference plane 85, which passes through the reference point 80 and a pair of the headlights OVh, and the road surface RS is θ5, a height from the road surface RS to the headlight OVh is h5, and a distance from the host vehicle 100 to the oncoming vehicle OV is Lb, the height h5 is expressed by the following Formula (5). $h 5 = Lb \times tan \left(θ5\right)$

Note that the distance Lb illustrated in FIG. 11 is a distance from the host vehicle 100 to the oncoming vehicle OV in a direction parallel to the front-rear direction of the host vehicle 100, but may be a distance from the host vehicle 100 to the oncoming vehicle OV in a direction from the host vehicle 100 to the oncoming vehicle OV.

In addition, when an angle formed by a straight line 86, which connects the reference point 80 and the upper edge 71ue of the first region 71, and the road surface RS is θ6, and a height from the headlight OVh to the edge 71ue is h6, the angle θ6 is expressed by the following Formula (6). $θ 6 = arctan \left(\left(h5+h6\right)/Lb\right)$

The formed angle θ6 is an angle in a direction from the host vehicle 100 to the edge 71ue. In the present embodiment, as described above, when the oncoming vehicle OV is present, position coordinates of a midpoint of a line segment connecting a pair of light points as the headlights OVh of the oncoming vehicle OV are input from the other vehicle detection device 120 to the control device CO as the position coordinates of the oncoming vehicle OV. That is, the formed angle θ5 can be calculated from information input from the other vehicle detection device 120 to the control device CO. The distance Lb from the host vehicle 100 to the oncoming vehicle OV is input from the other vehicle detection device 120 to the control device CO. In addition, h6 is stored in the memory ME in advance, and is, for example, 3.3 m. The control device CO of the present embodiment calculates the formed angle θ6 using the above Formulas (5) and (6) based on the information input from the other vehicle detection device 120 and the value of h6 stored in the memory ME.

In addition, when an angle formed by a straight line 87, which connects the reference point 80 and the lower edge 71de of the first region 71, and the road surface RS is θ7, and a height from the lower edge 71de of the first region 71 to the upper edge 71ue is h7, the angle θ7 is expressed by the following Formula (7). $θ 7 = arctan \left(\left(h5+h6-h7\right)/Lb\right)$

The formed angle θ7 is an angle in a direction from the host vehicle 100 to the edge 71de. The memory ME stores h7 in advance, and h7 is, for example, 3.8 m. The control device CO of the present embodiment calculates the formed angle θ7 using the above Formulas (5) and (7) based on the information input from the other vehicle detection device 120 and the values of h6 and h7 stored in the memory ME.

Although detailed description is omitted, the control device CO of the present embodiment calculates an angle in a direction from the host vehicle 100 to each of the left and right edges 61se and 71se of the first regions 61 and 71 based on the information input from the other vehicle detection device 120 to the control device CO, setting values stored in advance in the memory ME, and the like.

In this manner, the control device CO of the present embodiment calculates a position of each of the edges of the first regions 61 and 71 and the second region 62 as the angle in the direction from the host vehicle 100 to the edge, controls the lamp unit 10 based on the calculated angles, and sets a pattern of light to be emitted to the ADB light distribution pattern P1. Note that a method of calculating the angle from the host vehicle 100 to each of the edges of the first regions 61 and 71 and the second region 62 is not limited.

As described above, the headlight 1 for the vehicle of the present embodiment includes the lamp unit 10 and the control device CO, and the program of the present embodiment causes the control device CO to execute step SP15. Then, when other vehicles are located in front of the host vehicle 100, the control device CO of the present embodiment controls the lamp unit 10 such that the first regions 61 and 71 at least partially overlapping the other vehicles in the light distribution pattern PH of the high beam are darker as compared with the case where the other vehicles are not located in front of the host vehicle 100.

Here, for example, a large vehicle such as a truck may include a box-shaped cargo bed behind a driver's seat, and a cargo may be placed on the cargo bed. Therefore, in a case where the preceding vehicle is a large vehicle, light emitted from the lamp unit of the host vehicle is hard to reach a driver of the large vehicle, and it tends to be difficult to give glare to the driver. Therefore, the glare can be suppressed from being given to the driver of the preceding vehicle also by setting, for example, a region to be darkened for the preceding vehicle so as to entirely overlap the preceding vehicle when the preceding vehicle is a passenger vehicle and to make a large vehicle protrude upward when the preceding vehicle is the large vehicle. In addition, a position of a driver's seat of a large vehicle is typically higher than a position of a driver's seat of a passenger vehicle. Therefore, for example, when a region to be darkened for an oncoming vehicle is set to entirely overlap a passenger vehicle when the oncoming vehicle is the passenger vehicle and to make a large vehicle protrude upward when the oncoming vehicle is the large vehicle, a driver's seat of the large vehicle may not overlap the region to be darkened. Therefore, there is a case where glare cannot be suppressed from being given to a driver of the large vehicle that is the oncoming vehicle.

In the control device CO of the lamp unit 10, the program, and the headlight 1 for the vehicle of the present embodiment, the width 61W1 of the first region 61 in the up-down direction for the preceding vehicle LV when another vehicle is the preceding vehicle LV is narrower than the width 71W1 of the first region 71 in the up-down direction for the oncoming vehicle OV whose distance from the host vehicle 100 is identical to the distance from the host vehicle 100 to the preceding vehicle LV. Therefore, as illustrated in FIGS. 6 and 8, the first region 61, which is a region to be darkened for the preceding vehicle LV, can be set to overlap the entire passenger vehicle when the preceding vehicle LV is a passenger vehicle, and to make a large vehicle protrude upward when the preceding vehicle LV is the large vehicle. In addition, even if the oncoming vehicle OV is a large vehicle, the first region 71, which is a region to be darkened for the oncoming vehicle OV, can be set to overlap the entire large vehicle. Therefore, as compared with a case where the width 61W1 of the first region 61 in the up-down direction for the preceding vehicle LV when another vehicle is the preceding vehicle LV is equal to or larger than the width 71W1 of the first region 71 in the up-down direction for the oncoming vehicle OV, it is possible to suppress a decrease in visibility while suppressing glare from being given to a driver of the another vehicle.

In addition, in the control device CO of the lamp unit 10, the program, and the headlight 1 for the vehicle of the present embodiment, the width 61W1 of the first region 61 in the up-down direction for the preceding vehicle LV when another vehicle is the preceding vehicle LV is narrower than the width 71W1 of the first region 71 in the up-down direction for the oncoming vehicle OV having the same vehicle height as the preceding vehicle LV and the same distance from the host vehicle 100 as the distance from the host vehicle 100 to the preceding vehicle LV. Therefore, regardless of the vehicle height of the another vehicle, it is possible to suppress a decrease in visibility while suppressing glare from being given to a driver of the another vehicle.

In addition, the control device CO of the present embodiment controls the lamp unit 10 such that the second region 62 including a region above the first region 61 for the preceding vehicle LV when another vehicle is the preceding vehicle LV becomes darker as compared with a case where there is no other vehicle located in front of the host vehicle 100 and brighter than the first region 61. In a case where the preceding vehicle LV is a truck including a box-shaped cargo bed, emitted light may be reflected by the cargo bed, and glare may be given to the driver of the host vehicle 100 by the reflected light. According to the control device CO of the present embodiment, as compared with a case where the second region 62 is not darkened, it is possible to reduce the amount of light reflected by the cargo bed and emitted to the driver of the host vehicle 100, and it is possible to suppress the glare to the driver of the host vehicle 100 due to the reflected light.

In addition, the second region 62 is connected to the entire upper edge 61ue of the first region 61 in the present embodiment. According to such a configuration, the first region 61 and the second region 62, which are regions to be darkened, are integrated, and the driver of the host vehicle 100 can be suppressed from feeling uncomfortable. Note that it suffices that the second region 62 is connected to at least a part of the upper edge 61ue of the first region 61 from the viewpoint of suppressing the driver of the host vehicle 100 from feeling uncomfortable.

### (Second Embodiment)

Next, a second embodiment of the present invention will be described in detail. Note that components that are identical or equivalent to those of the first embodiment are denoted by the same reference signs, and redundant description will be omitted unless otherwise specified.

In the present embodiment, even if the preceding vehicle LV is located in front of the host vehicle 100, brightness of the second region 62 may be the same as that in a case where the preceding vehicle LV is not located in front of the host vehicle 100.

As described above, the other vehicle detection device 120 also serves as a luminance detection device that detects luminance of light directed from the front of the host vehicle 100 toward the host vehicle 100. Then, the other vehicle detection device 120 of the present embodiment outputs a signal indicating an image acquired by the image acquisition unit 121 to the control device CO via the ECU 101 together with a signal indicating information related to another vehicle.

Next, an operation of the headlight 1 for the vehicle of the present embodiment will be described. In the present embodiment, a control flowchart of the control device CO is the same as that of the first embodiment, but step SP15 of the present embodiment is different from step SP15 of the first embodiment. Therefore, step SP15 will be described hereinafter with reference to FIG. 4, and description of the other steps will be omitted.

### (Step SP15)

In step SP15 of the present embodiment, similarly to step SP15 of the first embodiment, light having an ADB light distribution pattern in accordance with vehicles located in front of the host vehicle 100, detected by the other vehicle detection device 120, is emitted from the headlight 1 for the vehicle. In the present embodiment, the control device CO controls the lamp unit 10 such that the first regions 61 and 71 at least partially overlapping the other vehicles in the light distribution pattern PH of a high beam are darker as compared with a case where the other vehicles are not located in front of the host vehicle 100. In addition, the control device CO changes an operation to be performed next according to luminance of a region corresponding to the second region 62 along the upper edge 61ue of the first region 61 for the preceding vehicle LV in the image acquired by the image acquisition unit 121.

In a case where the luminance of the above region in the image is equal to or more than a predetermined value, the control device CO controls the lamp unit 10 such that brightness of the second region 62 becomes darker as compared with a case where there is no other vehicle located in front of the host vehicle 100 and brighter than the first region 61, similarly to the first embodiment. Therefore, according to the present embodiment, for example, as illustrated in FIG. 6, in a case where the preceding vehicle LV is a truck and light is reflected by a cargo bed of the truck, the second region 62 can be made darker, and glare to a driver of the host vehicle 100 due to the reflected light can be suppressed. The predetermined value is, for example, lower than a value that a human feels dazzled at night, and is preferably about 500 cd/m² or more and less than 800 cd/m².

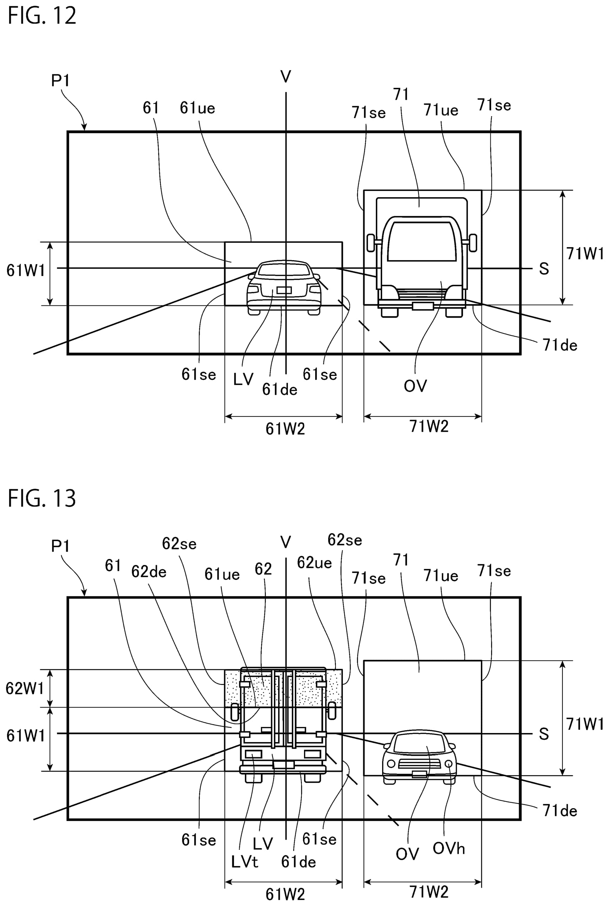

FIG. 12 is a view illustrating an example of the ADB light distribution pattern P1 in the present embodiment, similarly to FIG. 6. A situation illustrated in FIG. 12 is the same as the situation illustrated in FIG. 8. In a case where the luminance of the above region in the image is less than the predetermined value, the control device CO of the present embodiment controls the lamp unit 10 such that the brightness of the second region 62 is the same as that in the case where there is no other vehicle located in front of the host vehicle 100. Therefore, according to the present embodiment, for example, as illustrated in FIG. 12, when the preceding vehicle LV is a passenger car, it is possible to prevent the second region 62 from becoming darker. Therefore, according to the present embodiment, it is possible to suppress a decrease in visibility of the front of the host vehicle 100 while suppressing the glare to the driver of the host vehicle 100.

Although the present invention has been described by taking the above embodiments as examples, the present invention is not limited thereto.

For example, in the above embodiments, the brightness of the second region 62 including the region above the first region 61 for the preceding vehicle LV has changed. However, the brightness of the second region 62 may not always change.

In addition, in the above embodiments, the sum of the width 61W1 of the first region 61 in the up-down direction for the preceding vehicle LV and the width 62W1 of the second region 62 in the up-down direction is equal to the width 71W1 of the first region 71 in the up-down direction for the oncoming vehicle OV whose distance from the host vehicle 100 is identical to the distance from the host vehicle 100 to the preceding vehicle LV. However, the sum of the width 61W1 and the width 62W1 may not be equal to the width 71W1 for the oncoming vehicle OV.

FIG. 13 is a view illustrating an example of an ADB light distribution pattern according to a first modification, similarly to FIG. 6. A situation illustrated in FIG. 13 is the same as the situation illustrated in FIG. 6, and a distance from the host vehicle 100 to the preceding vehicle LV and a distance from the host vehicle 100 to the oncoming vehicle OV are the same. As illustrated in FIG. 13, in the present modification, the width 61W1 of the first region 61 in the up-down direction for the preceding vehicle LV is identical to the width 61W1 of the first region 61 in the up-down direction for the preceding vehicle LV having the same distance from the host vehicle 100 in the first embodiment. However, the width 62W1 of the second region 62 in the up-down direction for the preceding vehicle LV is narrower than the width 62W1 of the second region 62 in the up-down direction for the preceding vehicle LV having the same distance from the host vehicle 100 in the first embodiment. Therefore, the sum of the width 61W1 of the first region 61 and the width 62W1 of the second region 62 for the preceding vehicle LV is narrower than the width 71W1 of the first region 71 for the oncoming vehicle OV whose distance from the host vehicle 100 is identical to the distance from the host vehicle 100 to the preceding vehicle LV. Therefore, according to the present modification, as compared with a case where the sum is equal to or wider than the width 71W1 of the first region 71 for the oncoming vehicle OV, a width of a region to be darkened in the up-down direction, the region including the first region 61 and the second region 62, can be reduced, and a decrease in visibility of the front of the host vehicle 100 can be suppressed. Note that, from this viewpoint, the width 61W1 of the first region 61 for the preceding vehicle LV may be narrower than the width 61W1 of the first region 61 for the preceding vehicle LV having the same distance from the host vehicle 100 in the first embodiment.

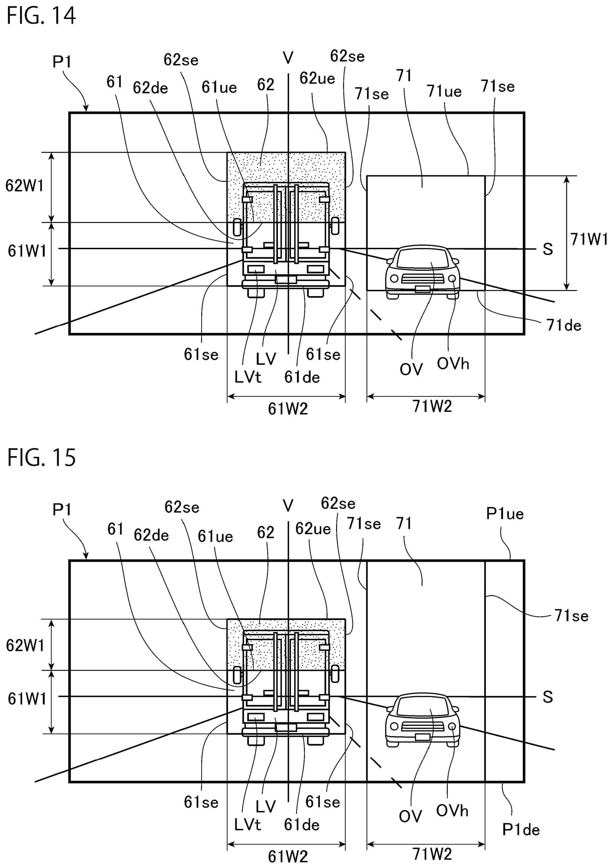

FIG. 14 is a view illustrating an example of an ADB light distribution pattern according to a second modification, similarly to FIG. 6. A situation illustrated in FIG. 14 is the same as the situation illustrated in FIG. 6, and a distance from the host vehicle 100 to the preceding vehicle LV and a distance from the host vehicle 100 to the oncoming vehicle OV are the same. As illustrated in FIG. 14, in the present modification, the width 61W1 of the first region 61 in the up-down direction for the preceding vehicle LV is identical to the width 61W1 of the first region 61 in the up-down direction for the preceding vehicle LV having the same distance from the host vehicle 100 in the first embodiment. However, the width 62W1 of the second region 62 in the up-down direction for the preceding vehicle LV is wider than the width 62W1 of the second region 62 in the up-down direction for the preceding vehicle LV having the same distance from the host vehicle 100 in the first embodiment. Therefore, the sum of the width 61W1 of the first region 61 and the width 62W1 of the second region 62 for the preceding vehicle LV is wider than the width 71W1 of the first region 71 for the oncoming vehicle OV whose distance from the host vehicle 100 is identical to the distance from the host vehicle 100 to the preceding vehicle LV. Therefore, according to the present modification, as compared with a case where the sum is equal to or narrower than the width 71W1 of the first region 71 in the up-down direction for the oncoming vehicle OV, a width of a region to be darkened in the up-down direction, the region including the first region 61 and the second region 62, can be made wider. Therefore, according to the present modification, as compared with the above case, for example, in a case where the preceding vehicle LV is a truck, and it is possible to further suppress glare to a driver of the host vehicle 100 due to reflected light reflected by a cargo bed of the truck.

In addition, in the above embodiments, the width 62W1 of the second region 62 in the up-down direction in the ADB light distribution pattern P1 projected on a projection plane at a place where the preceding vehicle LV is located is constant regardless of the distance from the host vehicle 100 to the preceding vehicle LV. However, the width 62W1 of the second region 62 in the up-down direction may change depending on the distance from the host vehicle 100 to the preceding vehicle LV, and may be narrower as the distance from the host vehicle 100 to the preceding vehicle LV increases, for example. As the distance from the host vehicle 100 to the preceding vehicle LV increases, a boundary between the first region 61 and the second region 62 appears blurred due to diffusion of light. Therefore, as described above, when the width 62W1 is narrowed as the distance from the host vehicle 100 to the preceding vehicle LV increases, the boundary between the first region 61 and the second region 62 can be made inconspicuous while suppressing a decrease in visibility of the front by narrowing the width 62W1 of the second region 62.

In addition, in the above embodiments, the width 71W1 of the first region 71 in the up-down direction for the oncoming vehicle OV is narrower than a width of the ADB light distribution pattern P1 in the up-down direction, and the first region 71 is spaced apart from at least one of upper and lower edges of the ADB light distribution pattern P1. However, the width 71W1 of the first region 71 in the up-down direction is not limited. FIG. 15 is a view illustrating an example of an ADB light distribution pattern according to a third modification, similarly to FIG. 6. A situation illustrated in FIG. 15 is the same as the situation illustrated in FIG. 6, and a distance from the host vehicle 100 to the preceding vehicle LV and a distance from the host vehicle 100 to the oncoming vehicle OV are the same. As illustrated in FIG. 15, in the present modification, the first region 71 for the oncoming vehicle OV extends from an upper edge P1ue to a lower edge P1de of the ADB light distribution pattern P1. The oncoming vehicle OV has a higher relative speed with respect to the host vehicle 100 than the preceding vehicle LV, and a position with respect to the host vehicle 100 easily changes. Therefore, according to the present modification, it is possible to suppress a decrease in an overlapping amount between the oncoming vehicle OV and the first region 71, and it is possible to easily suppress glare to a driver of the oncoming vehicle OV. Note that the first region 71 of the present modification extends along the vertical direction, but may extend along a direction non-parallel to the vertical direction. In addition, the width 71W2 of the first region 71 in the left-right direction is constant in the up-down direction, but may not be constant.

In addition, the second region 62 connected to the upper edge 61ue of the first region 61 has been described as an example in the above embodiments. However, it suffices that the second region 62 includes a region above the first region 61 from the viewpoint of suppressing glare to the driver of the host vehicle 100 due to reflected light reflected by a cargo bed or the like of a truck. For example, the second region 62 may be spaced apart from the first region 61, and the lower edge 62de may be inclined with respect to the upper edge 61ue. In addition, a shape of the second region 62 is not limited. In addition, the second region 62 may include a plurality of regions spaced apart from each other, and in this case, the plurality of regions may be arranged side by side in the left-right direction or the up-down direction. In addition, a width of the second region 62 in the left-right direction may be narrower than the width 61W2 of the first region 61 in the left-right direction. According to such a configuration, the region that becomes darker can be narrowed, and the decrease in visibility of the front can be suppressed. In addition, the width of the second region 62 in the left-right direction may be wider than the width 61W2 of the first region 61 in the left-right direction. In addition, the right edge 62se of the second region 62 may be located on a side closer to the center of the preceding vehicle LV in the left-right direction with respect to the right edge 61se of the first region 61, or may be located on a side opposite to the center side of the preceding vehicle LV in the left-right direction with respect to the right edge 61se of the first region 61. In addition, the left edge 62se of the second region 62 may be located on a side closer to the center of the preceding vehicle LV in the left-right direction with respect to the left edge 61se of the first region 61, or may be located on a side opposite to the center side of the preceding vehicle LV in the left-right direction with respect to the left edge 61se of the first region 61.

In addition, a position in the up-down direction of the lower edge 61de of the first region 61 for the preceding vehicle LV may be the same as a position in the up-down direction of the lower edge 71de of the first region 71 for the oncoming vehicle OV. Note that the positions of the edges 61de and 71de in the up-down direction are heights from the road surface RS. In addition, the position of the lower edge 61de in the up-down direction may be higher or lower than the position of the lower edge 71de in the up-down direction.

In addition, the example in which the first region and the second region are darkened in the light distribution pattern PH of the high beam has been described in the above embodiments. However, the light distribution pattern in which the first region and the second region are darkened is not limited. For example, this light distribution pattern may be an additional light distribution pattern that is added to a light distribution pattern of a low beam to form a light distribution pattern of a high beam. In this case, for example, the low beam is emitted from a lamp unit different from the lamp unit 10, and the lamp unit 10 emits light of the additional light distribution pattern.

In addition, the light source part 12 including the plurality of light emitting elements 13 capable of individually changing the amount of emitted light has been described as an example in the above embodiments. However, the light source part 12 is not limited. For example, the light source part 12 may include a DMD (Digital Mirror Device) including a plurality of reflective elements arranged in a matrix and a light emitting part that irradiates the DMD with light. The DMD can adjust the amount of light emitted from a reflective surface of each of the reflective elements in a predetermined direction, and can form a light distribution pattern in accordance with the amount of light emitted from each of the reflective elements in the predetermined direction.

In addition, the other vehicle detection device 120 also serving as the luminance detection device has been described as an example in the above embodiments. However, the host vehicle 100 in the second embodiment may include a luminance detection device separately from the other vehicle detection device 120, and examples of the luminance detection device include the cameras listed in the image acquisition unit 121.

In addition, the host vehicle 100 that includes the pair of headlights 1 for the vehicle each including the control device CO and the memory ME has been described as an example in the above embodiments. However, at least one of the control device CO and the memory ME may be shared by the pair of headlights 1 for the vehicle. In addition, a signal output from the other vehicle detection device 120 may be input to the control device CO without passing through the ECU 101 of the host vehicle 100. In addition, the vehicle provided with the headlight 1 for the vehicle may be, for example, a two-wheeled vehicle. In addition, the number of headlights 1 for the vehicle included in the vehicle is not limited, and may be, for example, one.

According to the present invention, a control device for a lamp unit, a program, and a headlight for a vehicle, which are capable of achieving a lamp unit capable of suppressing a decrease in visibility while suppressing glare from being given to a driver of another vehicle, are provided, and can be used in the field of headlights for vehicles such as automobiles.

## Claims

1. A control device for a lamp unit capable of receiving a signal input from an other vehicle detection device that detects another vehicle located in front of a host vehicle and changing a light distribution pattern of emitted light, wherein
in a case where the another vehicle is located in front of the host vehicle, a signal capable of controlling the lamp unit is output to make a first region darker as compared with a case where the another vehicle is not located in front of the host vehicle, the first region overlapping at least a part of the another vehicle in the light distribution pattern, and
a width of the first region in an up-down direction for a preceding vehicle when the another vehicle is the preceding vehicle is narrower than a width of the first region in the up-down direction for an oncoming vehicle whose distance from the host vehicle is identical to a distance from the host vehicle to the preceding vehicle.

2. The control device for the lamp unit according to claim 1, wherein
the width of the first region in the up-down direction for the preceding vehicle when the another vehicle is the preceding vehicle is narrower than the width of the first region in the up-down direction for the oncoming vehicle having a vehicle height identical to a vehicle height of the preceding vehicle.

3. The control device for the lamp unit according to claim 1, wherein
a signal capable of controlling the lamp unit is output to make a second region darker as compared with the case where the another vehicle is not located in front of the host vehicle, and brighter than the first region, the second region including a region above the first region for the preceding vehicle when the another vehicle is the preceding vehicle.

4. The control device for the lamp unit according to claim 1, wherein
a signal is input from a luminance detection device that detects luminance of light from a front of the host vehicle toward the host vehicle, and
a signal is output when luminance of light directed from a second region toward the host vehicle is equal to or more than a predetermined value, the second region including a region above the first region for the preceding vehicle when the another vehicle is the preceding vehicle, the signal being capable of controlling the lamp unit to make the second region darker as compared with the case where the another vehicle is not located in front of the host vehicle, and brighter than the first region.

5. The control device for the lamp unit according to claim 3 or 4, wherein
a sum of the width of the first region in the up-down direction and a width of the second region in the up-down direction for the preceding vehicle when the another vehicle is the preceding vehicle is narrower than the width of the first region in the up-down direction for the oncoming vehicle.

6. The control device for the lamp unit according to claim 3 or 4, wherein
a sum of the width of the first region in the up-down direction and a width of the second region in the up-down direction for the preceding vehicle when the another vehicle is the preceding vehicle is wider than the width of the first region in the up-down direction for the oncoming vehicle.

7. The control device for the lamp unit according to claim 3 or 4, wherein
a sum of the width of the first region in the up-down direction and a width of the second region in the up-down direction for the preceding vehicle when the another vehicle is the preceding vehicle is equal to the width of the first region in the up-down direction for the oncoming vehicle.

8. The control device for the lamp unit according to claim 3 or 4, wherein
brightness of the second region is darker on a side closer to the first region.

9. The control device for the lamp unit according to claim 3 or 4, wherein
a width of the second region in the up-down direction is narrower as a distance from the host vehicle to the preceding vehicle increases.

10. The control device for the lamp unit according to any one of claims 1 to 4, wherein
the first region for the oncoming vehicle extends from an upper edge to a lower edge of the light distribution pattern.

11. A program causing
a control device for a lamp unit, capable of receiving a signal input from an other vehicle detection device that detects another vehicle located in front of a host vehicle and changing a light distribution pattern of emitted light, to execute
a step of outputting, in a case where the another vehicle is located in front of the host vehicle, a signal capable of controlling the lamp unit to make a first region darker as compared with a case where the another vehicle is not located in front of the host vehicle, the first region overlapping at least a part of the another vehicle in the light distribution pattern,
wherein a width of the first region in an up-down direction for a preceding vehicle when the another vehicle is the preceding vehicle is narrower than a width of the first region in the up-down direction for an oncoming vehicle whose distance from the host vehicle is identical to a distance from the host vehicle to the preceding vehicle.

12. A headlight for a vehicle comprising:
a lamp unit capable of changing a light distribution pattern of emitted light; and
a control device that controls the lamp unit by receiving a signal input from an other vehicle detection device that detects another vehicle located in front of a host vehicle,
wherein the control device controls the lamp unit, in a case where the another vehicle is located in front of the host vehicle, to make a first region darker as compared with a case where the another vehicle is not located in front of the host vehicle, the first region overlapping at least a part of the another vehicle in the light distribution pattern, and
a width of the first region in an up-down direction for a preceding vehicle when the another vehicle is the preceding vehicle is narrower than a width of the first region in the up-down direction for an oncoming vehicle whose distance from the host vehicle is identical to a distance from the host vehicle to the preceding vehicle.
